# EUROPEAN PATENT APPLICATION

(11) **EP 4 700 641 A1**
(43) Date of publication of application: **25.02.2026**
(21) Application number: 25191500.5
(22) Date of filing: 24.07.2025
(51) Int. Cl.: G06F 40/103, G06F 3/12, G06F 40/106, H04N 1/00

(54) **SYSTEMS AND METHODS FOR VOICE-ACTIVATED LABEL PRINTING USING ARTIFICIAL INTELLIGENCE**

(30) Priority: 23.08.2024 US 202418813658
(71) Applicant: Brady Worldwide, Inc., Milwaukee, Wisconsin 53223 (US)
(72) Inventor: BLOECHL, Andrew, Milwaukee, 53223 (US); RODRIGUEZ, Alfredo, Milwaukee, 53223 (US)
(74) Representative: Boult Wade Tennant LLP

(57) **Abstract**

In a label printing system that is configured for voice-activated label printing, a computing device includes a label printing module and a transcription module that generates a text transcription of voice input that includes spoken instructions for a label to be printed. The label printing system also includes a label intent module that generates a set of prompts for an Al model based on the text transcription. The set of prompts is structured to cause the Al model to interpret the text transcription and generate a data structure for printing the label. The label intent module provides the set of prompts to the Al model and receives the data structure from the Al model. The data structure includes label content and formatting instructions. The data structure is provided to the label printing module, which uses the data structure to cause the label to be printed on the printing device.

## Description

### CROSS-REFERENCE TO RELATED APPLICATIONS

N/A

### BACKGROUND

Label printing is an important function in various industries, including retail, manufacturing, logistics, and healthcare. Labels provide important information, facilitate organization, and ensure the accurate identification of products and items. Traditionally, label printing was performed using software running on desktop computers. However, with the advent of mobile technology, mobile applications have emerged as a convenient solution for designing and printing labels directly from smartphones and tablets. These mobile applications (or mobile "apps," as they are often called) offer users the flexibility to create custom labels on the go, leveraging the capabilities of modern label printers.

Some label printing applications allow users to design and customize labels. For example, some label printing applications allow users to select from pre-defined templates, customize text, and specify formatting options. Once a label design is finalized, the label printing application communicates with a connected label printer to produce the physical label.

Voice recognition technology has gained widespread adoption in recent years, allowing users to interact with devices and applications through spoken commands. In the context of label printing, voice recognition could potentially streamline the label design process by enabling users to dictate label content and formatting instructions. However, the application of voice recognition specifically for label printing has been limited, and existing solutions do not fully leverage the potential of this technology.

Using voice commands to print labels requires a mechanism to accurately interpret the user's spoken input, distinguishing between different types of instructions and generating the corresponding label design. One possible approach could involve predefined voice commands mapped to specific actions within the label printing application. For example, a user might say "add text" followed by the desired content, or "change font size to 12 points." While this method could work for simple commands, it becomes increasingly complex and less intuitive as the range of possible instructions expands.

Another possible approach is to use rule-based algorithms to parse the user's spoken input and convert it into label design elements. These algorithms could analyze the transcription of the voice input, identify keywords and phrases, and apply predefined rules to generate the label content and formatting. However, this method has several disadvantages. Rule-based systems can be rigid and limited in their ability to handle variations in natural language, making them prone to errors when users phrase their commands in unexpected ways. Additionally, developing and maintaining a comprehensive set of rules for all possible label design scenarios is a resource-intensive task.

Accordingly, there is a need for improved systems and methods for accurately and flexibly interpreting voice commands for label printing.

The subject matter in the background section is intended to provide an overview of the overall context for the subject matter disclosed herein. The subject matter discussed in the background section should not be assumed to be prior art merely as a result of its mention in the background section. Similarly, a problem mentioned in the background section or associated with the subject matter of the background section should not be assumed to have been previously recognized in the prior art.

### SUMMARY

The present disclosure is generally related to systems and methods that utilize artificial intelligence (AI) to facilitate voice-activated label design and printing. In accordance with the present disclosure, an Al model can be utilized to interpret the user's spoken input in order to determine the content and characteristics of the label to be printed.

In some embodiments, the techniques disclosed herein can be utilized in a label printing system that includes a label printing module running on a mobile device (or other type of computing device) that is communicatively coupled to a printing device. When a user of the label printing module wants to print a label, the user can provide voice input that includes spoken instructions for the label. A transcription module can generate a text transcription of the voice input, and the text transcription can be provided to a label intent module. The label intent module can be located on one or more servers that are communicatively coupled to the mobile device.

The label intent module can be configured to generate a set of prompts for an Al model based on the text transcription. The set of prompts can be structured to cause the Al model to interpret the text transcription and generate a data structure for printing the label. Once the set of prompts has been generated, the label intent module can provide the set of prompts to the Al model. The Al model can then generate the data structure based on the set of prompts and return the data structure to the label intent module. The label intent module can then provide the data structure to the label printing module, and the label printing module can use the data structure to cause the label to be printed on the printing device.

In some embodiments, the Al model incorporated into the label printing system utilizes a transformer-based language model with contextual understanding capabilities. This contextual understanding enhances the Al model's ability to accurately interpret and process the user's voice input. The set of prompts provided to the Al model can be designed to take advantage of these contextual understanding capabilities.

In some embodiments, the label printing system incorporates a pre-processing module that is designed to refine the text transcription before it is interpreted by the Al model. The pre-processing module can be configured to apply a set of predefined replacement rules to the text transcription. For example, the pre-processing module can correct common transcription errors, standardize terminology, and generally improve the quality of the input data that is provided to the Al model. This pre-processing step can enhance the accuracy and efficiency of the subsequent label generation process.

In some embodiments, the replacement rules utilized by the pre-processing module can be dynamically adjusted. This allows for customization and adaptability to different user preferences or industry-specific requirements. For example, users can specify whether to use numerical or written formats for numbers, expand or abbreviate certain terms, or apply industry-specific terminology replacements. This flexibility ensures that the label printing system can accommodate a wide range of labeling needs across various domains.

In some embodiments, the label printing system includes multiple sets of replacement rules tailored to different industries or use cases. The system can prompt the user to select the most appropriate set of rules based on the specific labeling task at hand. This feature further enhances the system's adaptability and ensures that the generated labels adhere to industry-specific conventions and terminology.

In some embodiments, the set of prompts that is generated by the label intent module and provided to the Al model includes at least three distinct prompts: a system prompt, an assistant prompt, and a user prompt. The system prompt provides high-level instructions to the Al model, informing the Al model of its overall task and guiding its interpretation of the user's input. The assistant prompt specifies the format that the Al model should follow for the output data structure. The user prompt contains the actual text transcription of the user's spoken input, which the Al model processes according to the instructions in the system prompt to extract the necessary information for generating the label.

In some embodiments, the label printing system additionally includes a prompt improvement database. This database is designed to store prompt/result pairs, where each pair consists of a set of prompts that were provided to the Al model and the corresponding data structure that the Al model generated in response to those prompts. This feature allows the system to keep a record of its interactions with the Al model, which can be valuable for analyzing and improving the system's performance over time.

The systems and methods described herein offer several advantages relative to known approaches for label printing. By incorporating both Al and voice recognition technology, the disclosed label printing system enables a more efficient and user-friendly label creation process. Users can simply speak their label requirements, eliminating the need for manual text input or navigating complex formatting menus. This not only saves time but also reduces the potential for errors that can occur with manual data entry. Additionally, the use of Al allows for greater flexibility and adaptability in label design. The Al model can interpret a wide range of spoken instructions, accommodating variations in language and user preferences. This versatility makes the system suitable for diverse labeling needs across various industries.

In some embodiments, a label printing system for facilitating voice-activated label printing is disclosed. The label printing system includes a printing device and a computing device that is communicatively coupled to the printing device. The computing device includes a label printing module and a transcription module that is configured to generate a text transcription of voice input from a user of the label printing module. The voice input includes spoken instructions for a label to be printed. The label printing system also includes at least one server that is communicatively coupled to the computing device. The at least one server includes at least one processor, memory communicatively coupled to the at least one processor, and instructions stored in the memory. The instructions are executable by the at least one processor to generate a set of prompts for an Al model based on the text transcription. The set of prompts is structured to cause the Al model to interpret the text transcription and generate a data structure for printing the label. The instructions are also executable by the at least one processor to provide the set of prompts to the Al model. The instructions are also executable by the at least one processor to receive the data structure from the Al model. The data structure includes label content and formatting instructions. The instructions are also executable by the at least one processor to provide the data structure to the label printing module. The label printing module uses the data structure to cause the label to be printed on the printing device.

In some embodiments, a label printing system for facilitating voice-activated label printing by a label printing module is disclosed. The label printing module is running on a computing device that is communicatively coupled to a printing device. The label printing system includes at least one processor, memory communicatively coupled to the at least one processor, and instructions stored in the memory. The instructions are executable by the at least one processor to generate a set of prompts for an Al model based on a text transcription of voice input. The voice input includes spoken instructions for a label to be printed. The set of prompts is designed to cause the Al model to interpret the text transcription and generate a data structure for printing the label. The instructions are additionally executable by the at least one processor to provide the set of prompts to the Al model and receive the data structure from the Al model. The data structure includes label content and formatting instructions. The instructions are additionally executable by the at least one processor to provide the data structure to the label printing module. The label printing module uses the data structure to cause the label to be printed on the printing device.

In some embodiments, a computer-readable medium that is configured to facilitate voice-activated label printing is disclosed. The computer-readable medium includes instructions that are executable by at least one processor to generate a set of prompts for an Al model based on a text transcription of voice input from a user of a computing device. The voice input includes spoken instructions for a label to be printed. The set of prompts is designed to cause the Al model to interpret the text transcription and generate a data structure for printing the label. The computer-readable medium also includes instructions that are executable by at least one processor to provide the set of prompts to the Al model and to receive the data structure from the Al model. The data structure includes label content and formatting instructions. The computer-readable medium also includes instructions that are executable by at least one processor to provide the data structure to the label printing module. The label printing module uses the data structure to cause the label to be printed on a printing device.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description that follows. Features and advantages of the disclosure may be realized and obtained by means of the systems and methods that are particularly pointed out in the appended claims. Features of the present disclosure will become more fully apparent from the following description and appended claims, or may be learned by the practice of the disclosed subject matter as set forth hereinafter.

### BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, the like elements have been designated by like reference numbers throughout the various accompanying figures. Understanding that the drawings depict some example embodiments, the embodiments will be described and explained with additional specificity and detail through the use of the accompanying drawings in which:
Figure 1 illustrates aspects of a label printing system in which the techniques disclosed herein can be utilized.
Figure 2 illustrates an example of processing that can take place on the mobile device in the label printing system in connection with the voice-activated printing of a label.
Figure 3 illustrates an example of processing that can take place on the server(s) in the label printing system in connection with the voice-activated printing of a label.
Figure 4 illustrates an example of a set of prompts that can be generated by the label intent module in the label printing system in connection with the voice-activated printing of a label.
Figures 5A, 5B, and 5C illustrate an example of a method that can be performed by the various components in the label printing system in order to print a label.

### DETAILED DESCRIPTION

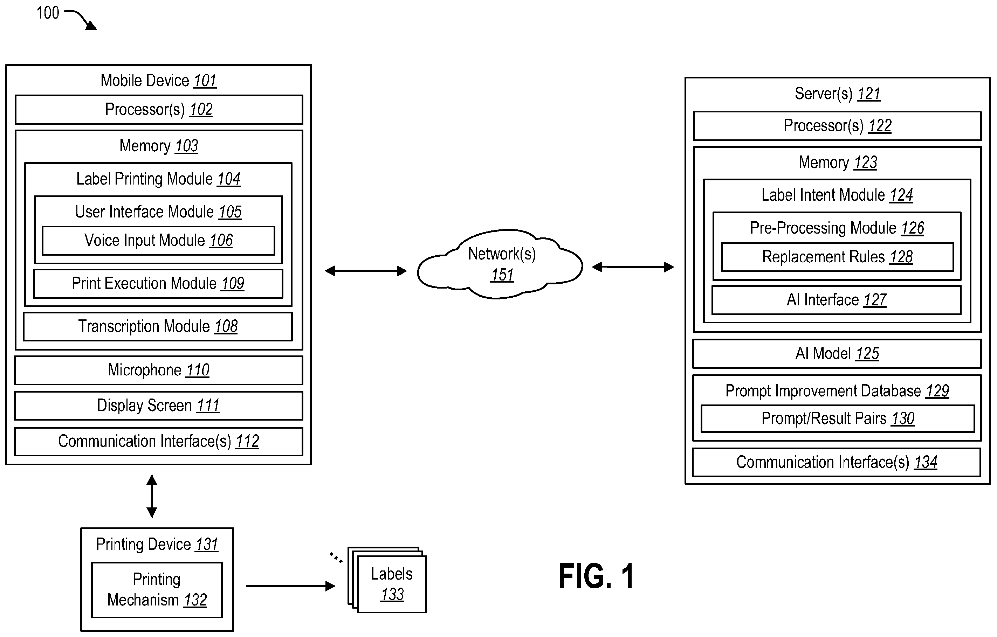

Figure 1 illustrates aspects of a label printing system 100 in which the techniques disclosed herein can be utilized. The label printing system 100 includes a computing device. In the depicted embodiment, the computing device takes the form of a mobile device 101, such as a smartphone or tablet computer. The mobile device 101 includes one or more processors 102 and memory 103 that is communicatively coupled to the processor(s) 102. In alternative embodiments, the techniques disclosed herein may be utilized in connection with a different type of computing device, such as a laptop computer, a desktop computer, a wearable device (e.g., a smartwatch), or the like.

The label printing system 100 also includes a printing device 131. The printing device 131 is a hardware unit designed to produce printed material, such as labels 133. The printing device 131 includes a printing mechanism 132 that is configured to make a persistent representation of text, graphics, or other indicia on a substrate, such as a label 131. There are a variety of different printing technologies that the printing mechanism 132 can be configured to utilize. Some non-limiting examples include thermal transfer printing, direct thermal printing, inkjet printing, laser printing, and dye sublimation.

The mobile device 101 is communicatively coupled to the printing device 131 such that a user of the mobile device 101 can print items, like labels 133, on the printing device 131. The mobile device 101 communicates with the printing device 131 via a wireless or wired connection to transmit print commands and print data. The mobile device 101 is shown with communication interface(s) 112 that facilitate such communication with other devices.

The label printing system 100 also includes one or more servers 121. The server(s) 121 include one or more processors 122 and memory 123 that is communicatively coupled to the processor(s) 122. The server(s) 121 are separate from the mobile device 101, and the mobile device 101 is communicatively coupled to the server(s) 121. In some embodiments, communication between the mobile device 101 and the server(s) 121 can occur via one or more computer network(s) 151. Communication between the mobile device 101 and the server(s) 121 can occur via wired and/or wireless technologies. The server(s) 121 are shown with communication interface(s) 134 that facilitate communication with the mobile device 101.

The mobile device 101 includes a label printing module 104, which is software that is designed to facilitate the printing of labels 133. The label printing module 104 can be implemented in various ways. In some embodiments, the label printing module 104 is a standalone software application that is installed on the mobile device 101. In other embodiments, the label printing module 104 can be implemented as one or more components that are integrated into a larger software application on the mobile device 101. For example, in some embodiments the label printing module 104 can be implemented as a library, an extension, an add-on, a plug-in, or the like.

The label printing module 104 includes a user interface module 105 that facilitates user control of the label printing module 104. In some embodiments, the user interface module 105 enables users to design, customize, and manage label printing tasks. The user interface module 105 may additionally facilitate user control by providing feedback and notifications, such as confirming successful printing or alerting users to errors or required actions.

The mobile device 101 can include a display screen 111, which is an output device that visually presents information to the user. The user interface module 105 can utilize the display screen 111 to display previews of labels 133 before they are printed. In some embodiments, the display screen 111 can be a touch screen that allows users to provide input by touching the screen. The touch screen functionality can enhance user interaction by allowing users to easily adjust the design of a label 133 through touch gestures, such as dragging, tapping, and pinching to zoom.

The label printing module 104 also includes a print execution module 109 that is responsible for managing the interaction between the label printing module 104 and the printing device 131. In some embodiments, the print execution module 109 oversees the processing of print commands, generating print data that the printing device 131 can understand and execute. The print execution module 109 can also handle the communication protocols required to transmit the print data to the printing device 131, ensuring that the labels 133 are printed according to the specified parameters and instructions.

The label printing module 104 is configured for voice-activated label design and printing. The user interface module 105 includes a voice input module 106 that facilitates the printing of labels 133 through voice input. In this context, the term "voice input" refers to spoken words or utterances produced by a user with the intention of communicating with the mobile device 101. Voice input encompasses a wide range of spoken language, including commands, instructions, requests, and dictations. The voice input module 106 is configured to utilize a microphone 110 within the mobile device 101 to capture the user's voice input for the label design process. The voice input module 106 also utilizes a transcription module 108 on the mobile device 101 and a label intent module 124 on the server(s) 121 to interpret and execute the user's voice input in connection with the printing of labels 133.

The transcription module 108 is configured to generate a text transcription of the user's voice input. The transcription module 108 can be implemented using various speech recognition technologies capable of accurately transcribing spoken language into textual data. In the depicted system 100, the transcription module 108 is shown as being separate from the label printing module 104. For example, in some embodiments, the transcription module 108 can be included within the operating system of the mobile device 101. Alternatively, the transcription module 108 can be a separate module that is distinct from both the label printing module 104 and the operating system of the mobile device 101, potentially functioning as an external service or application. Although the transcription module 108 is shown on the same mobile device 101 as the label printing module 104, in some embodiments these components may be located on different devices. Alternatively, in other embodiments, the transcription module 108 can be included within the label printing module 104 itself.

The label intent module 124 is configured to utilize an Al model 125 to interpret the user's spoken input in order to determine the characteristics and content of the label 133 to be printed. In some embodiments, the Al model 125 takes the form of a transformer-based language model. Transformer-based models, such as those in the GPT (Generative Pre-trained Transformer) series, are designed to understand and generate human-like text by leveraging their ability to process and analyze large amounts of contextual information. These models can be categorized as large language models (LLMs) or small language models (SLMs). Some non-limiting examples of LLMs include ChatGPT from OpenAl and Gemini from Google. Some non-limiting examples of SLMs include Phi-3 from Microsoft. SLMs, while still transformer-based, may provide performance improvements over LLMs in some embodiments. Other non-limiting examples of Al models 125 that can be used include BERT (Bidirectional Encoder Representations from Transformers) from Google, T5 (Text-To-Text Transfer Transformer) from Google, and RoBERTa (A Robustly Optimized BERT Pretraining Approach) from Meta Al.

The label intent module 124 includes a pre-processing module 126 and an Al interface 127. In some embodiments, the pre-processing module 126 is responsible for processing a text transcription of the user's voice input (as generated by the transcription module 108) by applying predefined replacement rules 128 to correct common transcription errors and standardize the text. The Al interface 127 communicates with the Al model 125 to interpret the text transcription and generate a data structure that the label printing module 104 can use to print the label 133. The pre-processing module 126 and the Al interface 127 will be described in greater detail below.

In some embodiments, the label printing system 100 additionally includes a database, referred to herein as the prompt improvement database 129. The prompt improvement database 129 can be configured to store prompt/result pairs 130. A prompt/result pair 130 includes a set of prompts provided to the Al model 125, along with a corresponding data structure that the Al model 125 generates in response to the set of prompts. This will be discussed in greater detail below. The prompt/result pairs 130 can be helpful for analyzing and improving the performance of the label printing system 100 over time.

The label intent module 124, the Al model 125, and the prompt improvement database 129 can be located on the same server 121 or distributed across different servers 121. In some embodiments, the label intent module 124, the Al model 125, and the prompt improvement database 129 can be located in the cloud. In this context, the term "cloud" refers to a network of remote servers hosted on the internet that provide computing resources and services to users. These servers can be maintained and operated by third-party cloud service providers. Cloud-based deployment provides several advantages, including elastic scalability and centralized management.

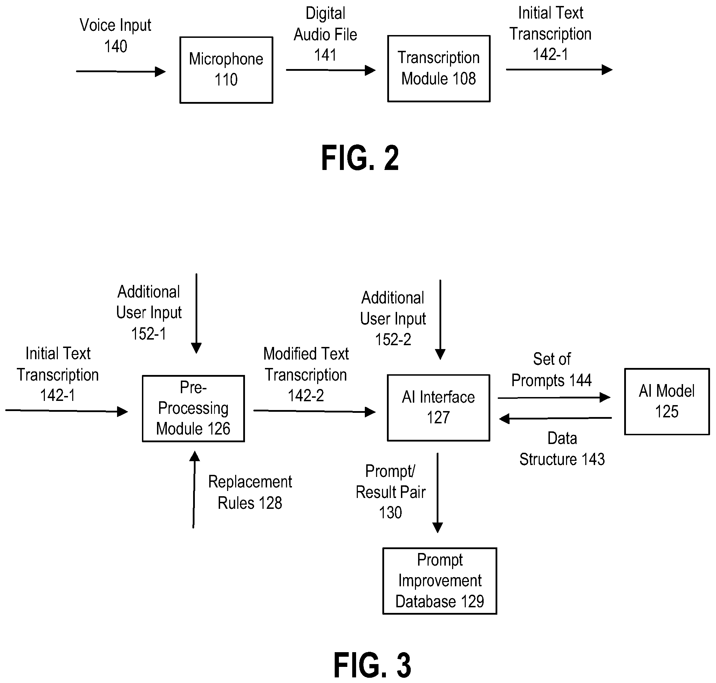

Figure 2 illustrates an example of the processing that can take place on the mobile device 101 in connection with the voice-activated printing of a label 133.

When a user provides voice input 140 to design and print a label 133, the microphone 110 can capture this voice input 140 and convert it into electrical signals. These electrical signals can then be processed by the processor(s) 102 to generate a digital audio file 141 representing the user's spoken input. The digital audio file 141 can be stored (at least temporarily) in the memory 103 of the mobile device 101 for subsequent processing by the transcription module 108.

The transcription module 108 can be configured to convert the digital audio file 141 into a text transcription, which will be referred to in the discussion that follows as an initial text transcription 142-1. This conversion process can include processing the digital audio file 141 using one or more speech recognition algorithms to transform the audio signals into corresponding text. The transcription module 108 can utilize various techniques to accurately decipher the spoken input and generate a textual representation of the original spoken words. Some non-limiting examples of techniques that can be utilized include Acoustic-Phonetic Modeling, which maps acoustic signals to phonetic units; Language Modeling, including n-gram models and neural network-based models like Recurrent Neural Networks (RNNs) and Transformer-based models; and Deep Neural Networks (DNNs) for learning complex speech patterns. Once the initial text transcription 142-1 has been generated, it can then be sent to the label intent module 124.

Figure 3 illustrates an example of the processing that can take place on the server(s) 121 in connection with the voice-activated printing of a label 133.

The initial text transcription 142-1 generated by the transcription module 108 can be processed by the pre-processing module 126 to generate a modified text transcription 142-2. The pre-processing module 126 can modify the initial text transcription 142-1 according to predefined replacement rules 128. The replacement rules 128 can be designed to correct common or predictable errors that can occur in the transcription process. For example, the pre-processing module 126 can replace phrases or words that are frequently misinterpreted. In some embodiments, the replacement rules 128 can also specify other types of text modifications as well. Some non-limiting examples of other text modifications include converting the text that will appear on the label 133 to a consistent format, abbreviating certain terms (or, conversely, expanding commonly used abbreviations to their full forms), and replacing synonyms and variations of common commands or content phrases with standardized terms.

In some embodiments, the replacement rules 128 can include a series of commands to replace a particular term or phrase with another term or phrase. A non-limiting example of such a series of commands is the following:
Replace ("roll ", "row ")
Replace ("-role ", "-row ")
Replace ("Tulane", "two line")
Replace ("bald", "bold")
Replace ("bowl", "bold")
Replace ("ball", "bold")
Replace ("Rowan", "Row 1")
Replace ("Nero", "new row")
Replace ("VRKR", "BRKR")

Suppose that the initial text transcription 142-1 received by the pre-processing module 126 is "Tulane label 133 all bald all caps first line panel f f line two CKT space VRKR space sixty eight". If the replacement rules 128 shown above were applied, the pre-processing module 126 would modify the initial text transcription 142-1 to create a modified text transcription 142-2 that says "two line label all bold all caps first line panel f f line two CKT space BRKR space sixty eight".

In some embodiments, the replacement rules 128 can be dynamically adjusted based on additional user input 152-1 that is distinct from the voice input 140. This allows for customization and flexibility in how the initial text transcription 142-1 is modified before being processed by the Al model 125.

For example, in some embodiments, the user interface module 105 can prompt the user to specify preferences or settings that influence the replacement rules 128. The user can be presented with options such as whether to print numbers as numerals or words, whether to expand or abbreviate certain terms, or whether to apply industry-specific terminology replacements. Based on the user's selections, the replacement rules 128 can be adjusted accordingly to ensure that the modified text transcription 142-2 aligns with the user's desired output format.

In some embodiments, the label printing system 100 can be configured with different sets of replacement rules 128 that can be tailored to different industries, allowing users to select a specific set of replacement rules 128 to be applied during the process of designing a label 133. This functionality allows the label printing system 100 to adapt the process of designing a label 133 to the unique terminologies and requirements of various industries, ensuring accuracy and relevance in the generated labels 133.

For example, a set of replacement rules 128 tailored for the healthcare industry might include specific terms and abbreviations commonly used in medical labeling, such as replacing "milligrams" with "mg" or "milliliters" with "ml". Similarly, a set of replacement rules 128 for the logistics industry might focus on terms related to shipping and handling, such as replacing "package" with "pkg" or "delivery" with "delv". As another example, a set of replacement rules 128 for the manufacturing industry might address terms related to production and quality control, such as replacing "part number" with "PN", "batch number" with "BN", and "inspection date" with "insp. date". Those skilled in the art will recognize other industries for which specific replacement rules 128 can be created.

The modified text transcription 142-2 produced by the pre-processing module 126 can be provided to the Al interface 127. The Al interface 127 communicates with the Al model 125 to generate a data structure 143 that can be used by the label printing module 104 to print the label 133. The Al interface 127 can be configured to generate a set of prompts 144 that guides the Al model 125 in accurately interpreting the user's spoken instructions. For example, the set of prompts 144 can be designed to cause the Al model 125 to differentiate between various elements of the modified text transcription 142-2 (such as the actual content to be included on the label 133 and any formatting instructions), and to generate the desired data structure 143 for printing the label 133.

The Al interface 127 can generate the set of prompts 144 based on the modified text transcription 142-2. In some embodiments, the Al interface 127 can generate the set of prompts 144 based on additional user input 152-2 as well. In some embodiments, the additional user input 152-2 can include user preferences or settings that influence how the set of prompts 144 is generated. For example, the user can specify a desired output format, a level of detail for formatting instructions, or specific terminology preferences. Based on this additional user input 152-2, the Al interface 127 can tailor the set of prompts 144 to ensure that the Al model 125 generates a data structure 143 that aligns with the user's requirements.

The data structure 143 generated by the Al model 125 can include information about both label content and formatting instructions. The label content refers to the actual text, graphics, or other information that will appear on the label 133. Formatting instructions, on the other hand, provide guidance on how this content should be arranged on the label 133. Examples of formatting instructions include stylistic elements such as placement, size, alignment, color, font type, and similar attributes.

A variety of formats can be used for the data structure 143. In some embodiments, the data structure 143 could be in the form of a JSON (JavaScript Object Notation) object, which organizes the label content and formatting instructions in a structured, hierarchical form. In alternative embodiments, other data formats such as XML (eXtensible Markup Language) or YAML (YAML Ain't Markup Language) can be used to represent the data structure 143, depending on the requirements and compatibility with the label printing module 104.

When the data structure 143 has been generated by the Al model 125, the data structure 143 can be sent to the label printing module 104. In some embodiments, the Al model 125 can return the data structure 143 to the Al interface 127, and the Al interface 127 (or another component within the label intent module 124) can send the data structure 143 to the label printing module 104. Alternatively, another component within the label intent module 124 can send the data structure 143 to the label printing module 104. When the data structure 143 has been received by the label printing module 104, the print execution module 109 within the label printing module 104 can use the data structure 143 to generate print data that is sent to the printing device 131 for printing the label 133.

While the pre-processing module 126 is described above as being implemented within the label intent module 124 on the server(s) 121, it will be appreciated that other implementations are possible. In some embodiments, the pre-processing module 126 can be implemented within the mobile device 101, such as within the label printing module 104. This would allow for pre-processing of the initial text transcription 142-1 to occur locally on the mobile device 101 before it is sent to the server(s) 121. As another example, the pre-processing module 126 can be implemented partially on the mobile device 101 and partially on the server(s) 121. In such a distributed implementation, certain pre-processing operations can be performed on the mobile device 101, and other pre-processing operations can be performed on the server(s) 121.

The use of the pre-processing module 126 is optional, and in some embodiments the label printing system 100 may not include this component. In such embodiments, instead of passing the initial text transcription 142-1 to the pre-processing module 126, the label printing module 104 can directly transfer the initial text transcription 142-1 to the Al interface 127. If the pre-processing module 126 is omitted in this way, the label printing system 100 can rely on the transcription accuracy provided by the transcription module 108 and the interpretive capabilities of the Al model 125 to ensure accuracy.

Because of the various ways that the techniques disclosed herein can be implemented, the term "text transcription" can refer to the initial text transcription 142-1 or the modified text transcription 142-2. For example, a statement that the Al interface 127 generates a set of prompts 144 for an Al model 125 based on a text transcription encompasses both (i) an embodiment where the pre-processing module 126 modifies the initial text transcription 142-1 to generate a modified text transcription 142-2 and the Al interface 127 generates the set of prompts 144 based on the modified text transcription 142-2, and (ii) an embodiment where the pre-processing module 126 is not utilized, the initial text transcription 142-1 is provided to the Al interface 127, and the Al interface 127 generates the set of prompts 144 based on the initial text transcription 142-1.

After the data structure 143 has been received from the Al model 125, the Al interface 127 can generate a prompt/result pair 130. The prompt/result pair 130 includes the set of prompts 144 that was provided to the Al model 125, along with the corresponding data structure 143 that was received from the Al model 125. The Al interface 127 can cause the prompt/result pair 130 to be stored in the prompt improvement database 129.

Over time, as many labels 133 are printed, a large number of prompt/result pairs 130 can be generated and stored in the prompt improvement database 129. As indicated above, prompt/result pairs 130 can be helpful for analyzing and improving the performance of the label printing system 100 over time. For example, reviewing the prompt/result pairs 130 can provide insights about how various system prompts 144-1 and assistant prompts 144-2 are affecting the way in which user prompts 144-3 are interpreted by the Al model 125. This can generate ideas for how to improve system prompts 144-1 and/or assistant prompts 144-2.

In some embodiments, a human operator could review the prompt/result pairs 130 stored in the prompt improvement database 129 to identify patterns, discrepancies, or areas where the interpretation of the user prompt 144-3 by the Al model 125 could be improved. For instance, a human reviewer might notice that certain formatting instructions are frequently misinterpreted by the Al model 125. Based on this observation, the reviewer could modify subsequent system prompts 144-1 to provide clearer guidance on handling those specific instructions. As another example, a human reviewer could identify redundant or ambiguous prompts that could be refined or removed to streamline the label printing process. In some embodiments, this review process could be automated, in whole or in part, using computer systems that apply machine learning algorithms to detect and suggest optimizations.

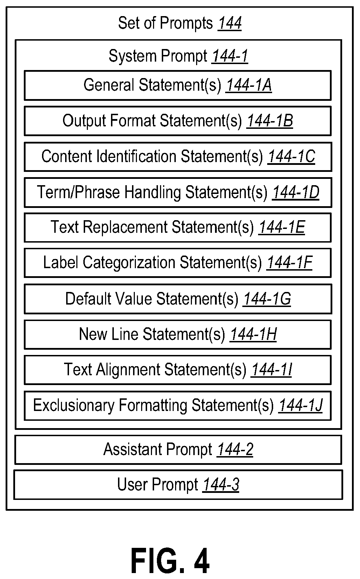

Figure 4 illustrates an example of the set of prompts 144 that can be generated by the Al interface 127. The set of prompts 144 includes a system prompt 144-1, an assistant prompt 144-2, and a user prompt 144-3.

The system prompt 144-1 provides general instructions to the Al model 125 on how to interpret the modified text transcription 142-2. The system prompt 144-1 sets the context for the Al model 125, guiding it on the overall approach to take when processing the user's spoken input. The system prompt 144-1 may include guidelines on distinguishing between different types of information and ensuring accurate conversion of the spoken input into a structured format. Some specific examples of instructions that can be included in the system prompt 144-1 will be described below.

The assistant prompt 144-2 specifies the format for the data structure 143 that the Al model 125 is supposed to generate. In other words, the assistant prompt 144-2 defines the schema or template that the Al model 125 should follow.

The user prompt 144-3 includes the text transcription of the user's spoken input. In other words, the user prompt 144-3 includes a representation of the spoken input that the Al model 125 should process. This can be either the initial text transcription 142-1 or the modified text transcription 142-2, depending on whether the pre-processing module 126 is being utilized.

Several examples of the types of statements that can be included in the system prompt 144-1 are shown in Figure 4. These examples illustrate how the system prompt 144-1 provides the necessary context and guidelines to ensure accurate interpretation and generation of the data structure 143 used for printing labels 133.

The system prompt 144-1 can include one or more general statements 144-1A to the Al model 125 on how to interpret the text transcription. In some embodiments, the general statement(s) 144-1A can include a statement that describes the overall task that the Al model 125 should perform. The following is an example of such a statement:
Users will provide you with a description of the label they want to create and you will return a JSON structure that can be used to print the label. This statement ensures that the Al model 125 understands its task: to interpret the user's spoken description (as represented in the text transcription) and convert it into a specific format.

The system prompt 144-1 can also include one or more statements that instruct the Al model 125 to ensure that the data structure 143 conforms to the format specified in the assistant prompt 144-2. Such statement(s) may be referred to herein as output format statement(s) 144-1B. In some embodiments, the output format statement(s) 144-1B can include a statement such as the following:

```
 Here's an example of your output format:
 {
      ""Textlines"": [""a""],
      ""Copies"": 1,
      ""TextAlignment"": """",
      ""SerialStart"" : """",
      ""SerialEnd"": """",
      ""SerialIncrement"": 1,
      ""Length"": 0,
      ""RepeatCount"": 1,
      ""IsWrap"": false
 }
```

The output format specified in the system prompt 144-1 should match the output format specified in the assistant prompt 144-2. For example, if the system prompt 144-1 includes the example output format as provided above, then the following would be an example of a corresponding assistant prompt 144-2:

```
 private static List<string> GetAssistantPrompts()
 {
      var result = new List<string>
      {
           @"{""Textlines"": [""a""], ""Copies"":1, ""TextAlignment"":"""
 ", ""SerialStart"":"""", ""SerialEnd"":"""", ""SerialIncrement"":1, ""Lengt
 h"":0, ""RepeatCount"":1, """"IsWrap"":false}"
      };
      return result;
 }
```

In some embodiments, the system prompt 144-1 can include one or more statements that cause the Al model 125 to distinguish between portions of the text transcription that contain the content of the label 133 (e.g., the text that should be printed on the label 133) and portions that include other information, such as formatting instructions. Such statement(s) may be referred to herein as content identification statement(s) 144-1C. In some embodiments, the content identification statement(s) 144-1C can include statements such as the following:
You are a label creator assistant. Users will ask you to generate labels for them. Capture one to many lines of text that will be printed on the label. The printable Text for the label will be included in the Textlines array. Any Descriptions or instructions will not be included in the Textlines array.
These statements ensure that the Al model 125 distinguishes between the actual text that is meant to appear on the label 133 and other spoken information.

In some embodiments, the system prompt 144-1 can include one or more statements that instruct the Al model 125 about how to appropriately handle specific terms and phrases. Such statements may be referred to herein as term/phrase handling statement(s) 144-1D. In some embodiments, the term/phrase handling statement(s) 144-1D can include statements such as the following:
The words Row and Line are interchangeable. A user may say Row or Line and mean the same thing. Row One is the same as Line One. Row Two is the same as Line Two and so on.

In some embodiments, the system prompt 144-1 can include one or more statements that cause the Al model 125 to perform predefined replacements in the text transcription 142. Such statement(s) may be referred to herein as text replacement statement(s) 144-1E. For example, the text replacement statement(s) 144-1E can include statements such as the following:
Before Interpreting the label, make the following replacements to the user message in order:
If the last word in the user prompt is 'and' replace it with end.
If the word 'in' directly follows a number, it should be converted to 'inch' .
If the words found, round, or bound are before a number, replace them with the word pound.
The word zero should be converted to 0.
The word one should be converted to 1. ...
The word colon should be converted to :.
The word dash should be converted to -.
The word slash should be converted to /.
Unless the word line is right before it, the word number should be converted to #.

The text replacement statement(s) 144-1E can be separate and distinct from the replacement rules 128 described previously. In some embodiments, although the replacement rules 128 and the text replacement statement(s) 144-1E operate independently, they can be designed to complement one another. For example, the replacement rules 128 can be designed to handle certain potential transcription issues at an earlier stage, ensuring that the text transcription 142 is as accurate and standardized as possible before being processed by the Al model 125. Subsequently, the text replacement statement(s) 144-1E within the system prompt 144-1 can provide an additional layer of refinement.

In some embodiments, the system prompt 144-1 can include one or more statements that cause the Al model 125 to identify and categorize different types of labels 133. Such statements may be referred to herein as label categorization statement(s) 144-1F. In some embodiments, the label categorization statement(s) 144-1F can include statements such as the following: There are regular Labels and Wrap Labels. Labels are regular by default with IsWrap returning false. If a user requests a label that is wrap, wire, wire flag, wire marker, rap, cable, flag, and/or marker, the user is describing a wrap label. Wrap Labels will return IsWrap as true.

In some embodiments, the system prompt 144-1 can include one or more statements that cause the Al model 125 to set default values for label attributes when the user does not provide specific values. Such statement(s) may be referred to herein as default value statement(s) 144-1G. In some embodiments, the default value statement(s) 144-1G can include statements such as the following:
If the user does not provide a Text Alignment, the default is Center.
Length will default to zero if it is not provided.
Labels are regular by default with IsWrap returning false.
The default for copies is 1.

In some embodiments, the system prompt 144-1 can include one or more statements that cause the Al model 125 to treat specific words as indicators of a new line of text. Such statement(s) may be referred to herein as new line statement(s) 144-1H. In some embodiments, the new line statement(s) 144-1H can include statements such as the following:
The following words mean that a new line of text is starting and the input should be moved to the next line: enter, next line, newline, line break,
new line, tab, carriage return, and return.

In some embodiments, the system prompt 144-1 can include one or more statements that cause the Al model 125 to detect and appropriately handle user-provided text alignment options. Such statement(s) may be referred to herein as text alignment statement(s) 144-11. In some embodiments, the text alignment statement(s) 144-11 can include statements such as the following:
The user can provide the following Text Alignment options: Left, Right, Top, Bottom, and Center. If the user does not provide a Text Alignment,
the default is Center. Do not print out alignment instructions.

In some embodiments, the system prompt 144-1 can include one or more statements that cause the Al model 125 to exclude specific formatting instructions from the text that is printed on the label 133. Such statements may be referred to herein as exclusionary formatting statement(s) 144-1J. In some embodiments, the exclusionary formatting statement(s) 144-1J can include one or more statements such as the following:
Do not print out length information.
Do not print out inches.
Do not print out the label type.
Do not print out length instructions.
Do not print out Row instructions.
Do not print out Line instructions.

Those skilled in the art will recognize that the kinds of statements provided in the preceding paragraphs are intended merely as illustrative examples. They are not exhaustive and should not be interpreted as limiting the scope of the present disclosure.

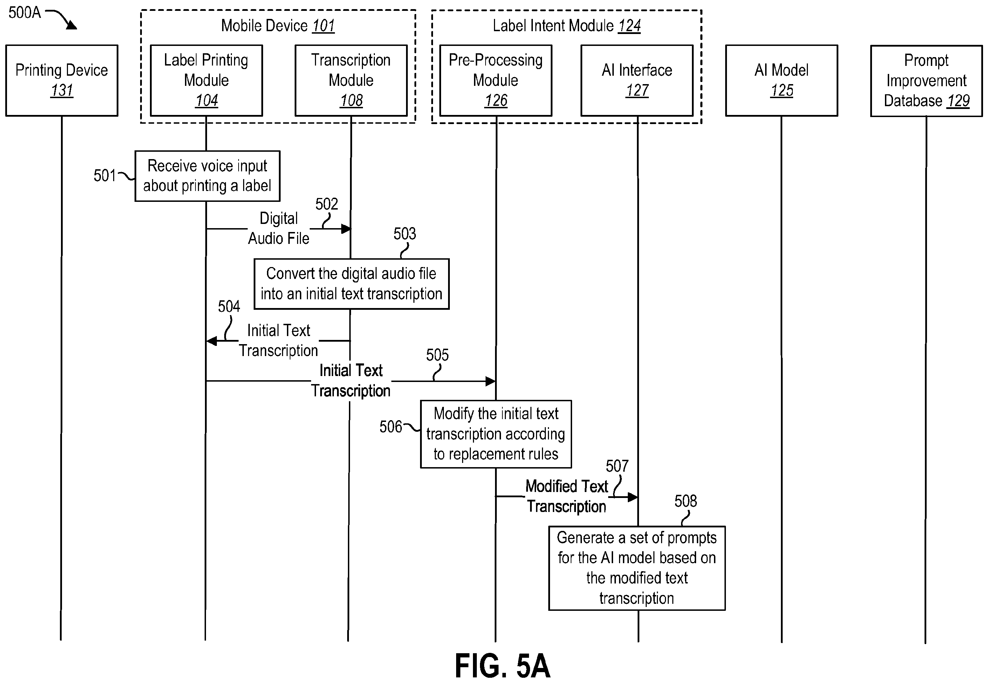

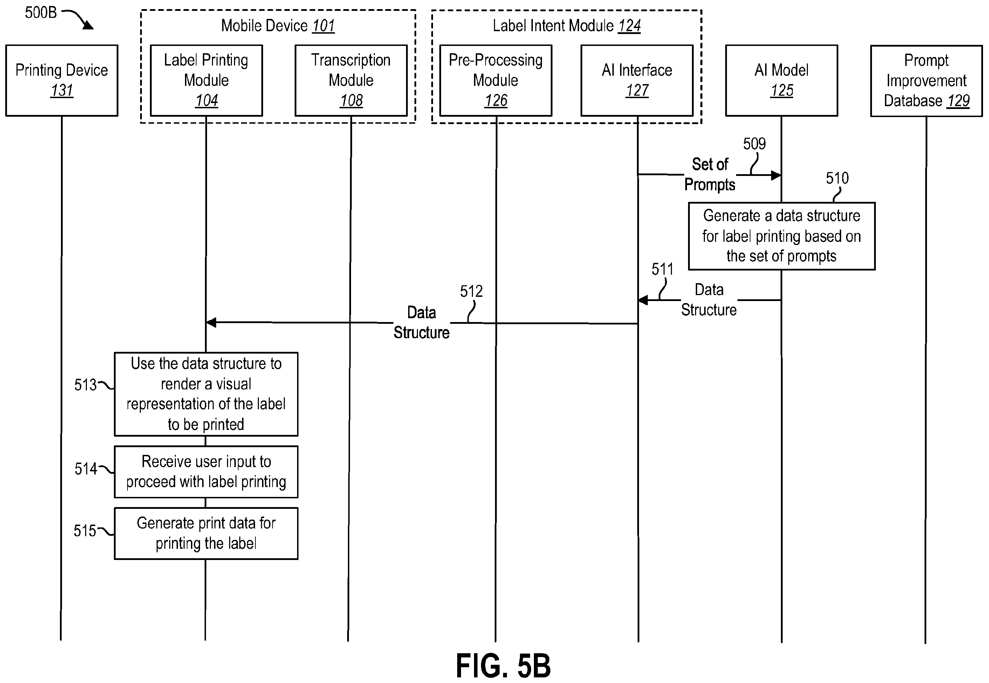

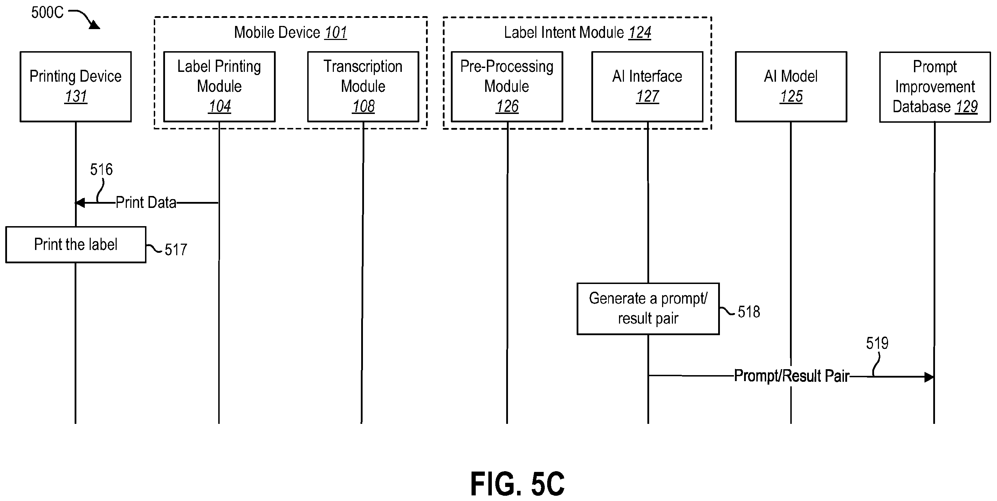

Figures 5A, 5B, and 5C illustrate an example of a method that can be performed by the various components in the label printing system 100 in order to print a label 133. A first part 500A of the method is shown in Figure 5A, a second part 500B of the method is shown in Figure 5B, and a third part 500C of the method is shown in Figure 5C.

Reference is initially made to Figure 5A. At 501, the label printing module 104 receives user input indicating that the user would like to print a label 133. The user input can be provided via the user interface module 105 of the label printing module 104. The user input includes voice input 140, which includes the user's spoken description of the label 133 the user wants to print. The voice input 140 may describe various aspects of the label 133, such as the content to be included as well as formatting instructions. The formatting instructions can include specific instructions regarding the layout or placement of text on the label 133. The voice input module 106 can capture the voice input 140 via a microphone 110 within the mobile device 101. As indicated above, the microphone 110 can capture the voice input 140 and generate a digital audio file 141 representing the user's spoken input.

At 502, in response to the voice input 140 received at 501, the voice input module 106 of the label printing module 104 provides the digital audio file 141 to the transcription module 108.

At 503, the transcription module 108 uses one or more speech recognition algorithms to convert the digital audio file 141 into an initial text transcription 142-1. At 504, the transcription module 108 returns the initial text transcription 142-1 to the label printing module 104.

At 505, the label printing module 104 passes the initial text transcription 142-1 to the pre-processing module 126. At 506, the pre-processing module 126 modifies the initial text transcription 142-1 according to a set of predefined replacement rules 128. As noted above, the replacement rules 128 can be designed to correct common or predictable errors that can occur in the transcription process. The replacement rules 128 can also specify other types of text modifications.

At 507, the pre-processing module 126 passes the modified text transcription 142-2 to the Al interface 127. At 508, the Al interface 127 generates a set of prompts 144 for the Al model 125 based on the modified text transcription 142-2. The set of prompts 144 is configured to cause the Al model 125 to interpret the modified text transcription 142-2 and generate a data structure 143 for printing a label 133.

Reference is now made to Figure 5B. At 509, the Al interface 127 provides the set of prompts 144 to the Al model 125. At 510, the Al model 125 generates a data structure 143 for printing the label 133 based on the guidance provided by the set of prompts 144. As noted above, the user prompt 144-3 can include a text transcription (e.g., the initial text transcription 142-1 or the modified text transcription 142-2 if the pre-processing module 126 is being utilized), and the system prompt 144-1 can be designed to cause the Al model 125 to interpret the text transcription to extract the necessary details for the design of the label 133, including both the content and the formatting instructions. This interpretation process causes the user's spoken commands to be accurately translated into a specific label design. Additionally, based on certain instructions included in the system prompt 144-1, the Al model 125 ensures that the data structure 143 matches the format specified by the assistant prompt 144-2.

At 511, the Al model 125 returns the data structure 143 to the Al interface 127. At 512, the Al interface 127 (or another component in the label intent module 124) provides this data structure 143 to the label printing module 104.

At 513, the user interface module 105 of the label printing module 104 utilizes the data structure 143 to render a visual representation of the label 133 on the display screen 111 of the mobile device 101. This allows the user to preview the label 133 before the label 133 is printed.

If the user is satisfied with the design, the user can provide input, via the user interface module 105, that causes the label printing module 104 to initiate the printing of the label 133 by the printing device 131. At 514, the label printing module 104 receives this user input. At 515, in response to the user input received at 514, the print execution module 109 of the label printing module 104 generates print data for printing the label 133. The print data is based on the data structure 143 received from the label intent module 124.

Reference is now made to Figure 5C. At 516, the print execution module 109 sends the print data to the printing device 131. At 517, the printing device 131 prints the label 133 based on the print data received from the label printing module 104.

At 518, the Al interface 127 generates a prompt/result pair 130. The prompt/result pair 130 includes the set of prompts 144 that was provided to the Al model 125 at 509, along with the corresponding data structure 143 that was generated by the Al model 125 at 510. At 519, the Al interface 127 causes the prompt/result pair 130 to be stored in the prompt improvement database 129. As noted above, the prompt/result pairs 130 in the prompt improvement database 129 can be helpful for analyzing and improving the performance of the label printing system 100 over time.

As noted above, in some embodiments the label printing system 100 can be configured with different sets of replacement rules 128 that can be tailored to different industries. In such embodiments, the label printing module 104 can be configured to prompt the user, via the user interface module 105, to select the set of replacement rules 128 that should be applied. In other words, the label printing module 104 can request user input about which set of replacement rules 128 should be applied. For example, the user can be presented with a list of available sets of replacement rules 128 categorized by industry. Upon making a selection, the label printing module 104 can send an indication of the user's choice to the pre-processing module 126 so that the correct set of replacement rules 128 can be applied. Alternatively, the pre-processing module 126 itself can prompt the user to choose the appropriate set of replacement rules 128.

By providing industry-specific replacement rules 128, the label printing system 100 can enhance its flexibility and adaptability, ensuring that the labels 133 being produced are tailored to the specific requirements and conventions of the specific industry in which the label printing system 100 is being used.

The techniques disclosed herein can be implemented in hardware, software, firmware, or any combination thereof, unless specifically described as being implemented in a specific manner.

At least some of the features disclosed herein have been described as modules or instructions that are executable by a processor to perform various operations, actions, or other functionality. The terms "module" and "instructions" should be interpreted broadly to include any type of computer-readable statement(s) that are executable by a processor to perform various operations, actions, or other functionality. For example, the terms "module" and "instructions" can refer to one or more applications, programs, scripts, binaries, executables, code, routines, sub-routines, functions, procedures, classes, objects, components, libraries, frameworks, or the like. A "module" or "instructions" can comprise a single computer-readable statement or many computer-readable statements. In addition, "modules" and "instructions" that have been described separately herein can be combined as desired in various embodiments.

The term "processor" should be interpreted broadly to encompass a general-purpose processor, a central processing unit (CPU), a microprocessor, a digital signal processor (DSP), a controller, a microcontroller, a state machine, and so forth. Under some circumstances, a "processor" may refer to an application specific integrated circuit (ASIC), a programmable logic device (PLD), a field programmable gate array (FPGA), etc. The term "processor" may refer to a combination of processing devices, e.g., a combination of a digital signal processor (DSP) and a microprocessor, a plurality of microprocessors, one or more microprocessors in conjunction with a digital signal processor (DSP) core, or any other such configuration.

The term "memory" should be interpreted broadly to encompass any electronic component capable of storing electronic information. The term "memory" may refer to various types of processor-readable media such as random-access memory (RAM), read-only memory (ROM), non-volatile random-access memory (NVRAM), programmable read-only memory (PROM), erasable programmable read-only memory (EPROM), electrically erasable PROM (EEPROM), flash memory, magnetic or optical data storage, registers, etc. Memory is said to be communicatively coupled to a processor if the processor can read information from and/or write information to the memory. Memory that is integral to a processor is communicatively coupled to the processor.

The term "communicatively coupled" refers to coupling of components such that these components are able to communicate with one another through, for example, wired, wireless, or other communications media. The term "communicatively coupled" can include direct, communicative coupling as well as indirect or "mediated" communicative coupling. For example, a component A may be communicatively coupled to a component B directly by at least one communication pathway, or a component A may be communicatively coupled to a component B indirectly by at least a first communication pathway that directly couples component A to a component C and at least a second communication pathway that directly couples component C to component B. In this case, component C is said to mediate the communicative coupling between component A and component B.

Any communication interface(s) described herein can be based on wireless communication technology and/or wired communication technology. Some examples of communication interfaces that are based on wireless communication technology include a Bluetooth wireless communication adapter, a wireless adapter that operates in accordance with an Institute of Electrical and Electronics Engineers (IEEE) 802.11 wireless communication protocol, and an infrared (IR) communication port. Some examples of communication interfaces that are based on wired communication technology include a Universal Serial Bus (USB) and an Ethernet adapter.

The term "display screen" can refer to a component that provides an interface for users to interact with a computing device and view output data in a visual form. Some examples of display screen technologies that can be utilized in connection with the techniques disclosed herein include liquid crystal display (LCD) technology, organic light emitting diode (OLED) technology, active matrix OLED (AMOLED) technology, electronic ink (e-ink) technology, microscopic light emitting diode (microLED) technology, and so forth. Those skilled in the art will recognize many additional types of display screen technologies that can be utilized in connection with the techniques disclosed herein.

The term "operating system" can refer to software that manages or controls the overall operation of a computing device by performing tasks such as managing hardware resources, running applications, enforcing security and access control, managing files, and/or providing a user interface.

The term "determining" (and grammatical variants thereof) can encompass a wide variety of actions. For example, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The terms "comprising," "including," and "having" are intended to be inclusive and mean that there can be additional elements other than the listed elements.

The phrase "based on" does not mean "based only on," unless expressly specified otherwise. In other words, the phrase "based on" describes both "based only on" and "based at least on."

The steps, operations, and/or actions of the methods described herein may be interchanged with one another without departing from the scope of the claims. In other words, unless a specific order of steps, operations, and/or actions is required for proper functioning of the method that is being described, the order and/or use of specific steps, operations, and/or actions may be modified without departing from the scope of the claims.

References to "one embodiment" or "an embodiment" of the present disclosure are not intended to be interpreted as excluding the existence of additional embodiments that also incorporate the recited features. For example, any element or feature described in relation to an embodiment herein may be combinable with any element or feature of any other embodiment described herein, where compatible.

In the above description, reference numbers have sometimes been used in connection with various terms. Where a term is used in connection with a reference number, this may be meant to refer to a specific element that is shown in one or more of the Figures. Where a term is used without a reference number, this may be meant to refer generally to the term without limitation to any particular Figure.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

Further embodiments of the disclosure are set out in the following numbered clauses:
Clause 1. A label printing system for facilitating voice-activated label printing, the label printing system comprising:
   a printing device;
   a computing device that is communicatively coupled to the printing device, the computing device comprising a label printing module and a transcription module that is configured to generate a text transcription of voice input from a user of the computing device, the voice input including spoken instructions for a label to be printed;
   at least one server that is communicatively coupled to the computing device, the at least one server comprising at least one processor, memory communicatively coupled to the at least one processor, and a label intent module stored in the memory, the label intent module being executable by the at least one processor to:
      generate a set of prompts for an Al model based on the text transcription, the set of prompts being structured to cause the Al model to interpret the text transcription and generate a data structure for printing the label;
      provide the set of prompts to the Al model;
      receive the data structure from the Al model, the data structure including label content and formatting instructions; and
      provide the data structure to the label printing module, wherein the label printing module uses the data structure to cause the label to be printed on the printing device.
Clause 2. The label printing system of clause 1, wherein the Al model comprises a transformer-based language model having contextual understanding capabilities, and the set of prompts are designed to utilize the contextual understanding capabilities of the transformer-based language model.
Clause 3. The label printing system of clause 1, further comprising a pre-processing module that is configured to modify the text transcription according to replacement rules to generate a modified text transcription, wherein the modified text transcription is used to generate the set of prompts.
Clause 4. The label printing system of clause 3, wherein the replacement rules are dynamically adjusted based on additional user input that is distinct from the voice input.
Clause 5. The label printing system of clause 3, wherein:
   the label printing system comprises a plurality of different sets of replacement rules; and
   the label printing module is configured to request user input about which set of replacement rules should be utilized.
Clause 6. The label printing system of clause 1, wherein the set of prompts comprises:
   a system prompt that provides general instructions to the Al model about how to interpret the text transcription;
   an assistant prompt that specifies a format for the data structure; and
   a user prompt that includes the text transcription.
Clause 7. The label printing system of clause 1, further comprising a prompt improvement database that is configured to store prompt/result pairs, wherein each prompt/result pair comprises:
   a set of prompts provided to the Al model; and
   a corresponding data structure generated by the Al model in response to the set of prompts.
Clause 8. The label printing system of clause 1, wherein the label printing module comprises a user interface module that is configured to utilize the data structure to render a visual representation of the label on a display screen of the computing device before the label is printed.

## Claims

1. A label printing system for facilitating voice-activated label printing by a label printing module that is running on a computing device that is communicatively coupled to a printing device, the label printing system comprising:
at least one processor;
memory communicatively coupled to the at least one processor;
instructions stored in the memory and executable by the at least one processor to:
generate a set of prompts for an Al model based on a text transcription of voice input, the voice input including spoken instructions for a label to be printed, the set of prompts being designed to cause the Al model to interpret the text transcription and generate a data structure for printing the label;
provide the set of prompts to the Al model;
receive the data structure from the Al model, the data structure including label content and formatting instructions; and
provide the data structure to the label printing module, wherein the label printing module uses the data structure to cause the label to be printed on the printing device.

2. The label printing system of claim 1, wherein the Al model comprises a transformer-based language model having contextual understanding capabilities, and the set of prompts are designed to utilize the contextual understanding capabilities of the transformer-based language model.

3. The label printing system of claim 1 or claim 2, wherein:
the instructions are additionally executable by the at least one processor to modify the text transcription according to replacement rules to generate a modified text transcription; and
the modified text transcription is used to generate the set of prompts.

4. The label printing system of claim 3, wherein the instructions are additionally executable by the at least one processor to dynamically adjust the replacement rules based on additional user input that is distinct from the voice input.

5. The label printing system of claim 4, wherein:
the label printing system comprises a plurality of different sets of replacement rules; and
the instructions are additionally executable by the at least one processor to request user input about which set of replacement rules should be utilized.

6. The label printing system of any of claims 1 through 5, wherein the set of prompts comprises:
a system prompt that provides general instructions to the Al model about how to interpret the text transcription;
an assistant prompt that specifies a format for the data structure; and
a user prompt that includes the text transcription.

7. The label printing system of any of claims 1 through 6, wherein the instructions are additionally executable by the at least one processor to store the set of prompts and the data structure as a prompt/result pair in a prompt improvement database.

8. The label printing system of any of claims 1 through 7, wherein the system prompt comprises instructions to the Al model to ensure that the data structure conforms to the format specified in the assistant prompt.

9. The label printing system of any of claims 1 through 8, wherein the system prompt comprises instructions to the Al model to differentiate between portions of the text transcription that include the label content and portions of the text transcription that include other information about the label.

10. The label printing system of any of claims 1 through 9, wherein the system prompt comprises instructions to the Al model for identifying and categorizing different types of labels.

11. The label printing system of any of claims 1 through 10, wherein the system prompt comprises instructions to the Al model for how to appropriately handle numeric characters and special characters.

12. The label printing system of any of claims 1 through 11, wherein the instructions are additionally executable by the at least one processor to utilize the data structure to render a visual representation of the label on a display screen of the computing device before the label is printed.

13. A computer-readable medium that is configured to facilitate voice-activated label printing, the computer-readable medium comprising instructions that are executable by at least one processor to:
generate a set of prompts for an Al model based on a text transcription of voice input from a user of a computing device, the voice input including spoken instructions for a label to be printed, the set of prompts being configured to cause the Al model to interpret the text transcription and generate a data structure for printing the label;
provide the set of prompts to the Al model;
receive the data structure from the Al model, the data structure including label content and formatting instructions; and
provide the data structure to the label printing module, wherein the label printing module uses the data structure to cause the label to be printed on a printing device.

14. The computer-readable medium of claim 13, wherein the set of prompts comprises:
a system prompt that provides general instructions to the Al model about how to interpret the text transcription;
an assistant prompt that specifies a format for the data structure; and
a user prompt that includes the text transcription.

15. The computer-readable medium of claim 14, wherein the system prompt comprises instructions to the Al model to:
ensure that the data structure conforms to the format specified in the assistant prompt;
differentiate between portions of the text transcription that include the label content and portions of the text transcription that include other information about the label;
identify and categorize different types of labels; and
handle numeric characters and special characters.
